# EUROPÄISCHE PATENTSCHRIFT

(11) **EP 4 306 010 B1**
(45) Veröffentlichungstag und Bekanntmachung des Hinweises auf die Patenterteilung: **29.04.2026**
(21) Anmeldenummer: 23185376.3
(22) Anmeldetag: 13.07.2023
(51) Int. Cl.: A47G 19/34, B65D 83/06, G01F 11/00, G01F 11/20, G01F 11/22, G01F 11/24

(54) **VORRICHTUNG ZUM DOSIEREN UND/ODER MISCHEN VON SCHÜTTFÄHIGEN LEBENSMITTELN, INSBESONDERE VON GEWÜRZEN**
DEVICE FOR DOSING AND/OR MIXING POURABLE FOOD PRODUCTS, IN PARTICULAR SPICES
DISPOSITIF DE DOSAGE ET/OU DE MÉLANGE DE PRODUITS ALIMENTAIRES VERSABLES, EN PARTICULIER D'ÉPICES

(30) Priorität: 13.07.2022 DE 102022117498
(43) Veröffentlichungstag der Anmeldung: 17.01.2024
(73) Patentinhaber: Werner, Carsten, 65396 Walluf (DE)
(72) Erfinder: Werner, Carsten, 65396 Walluf (DE)
(74) Vertreter: WSL Patentanwälte Partnerschaft mbB

(56) Entgegenhaltungen:
- EP-A1- 3 824 770
- US-A- 4 691 821
- US-A- 5 469 992

## Beschreibung

### GEGENSTAND DER ERFINDUNG

Die vorliegende Erfindung betrifft eine Vorrichtung zum Dosieren und/oder Mischen von schüttfähigen Lebensmitteln, insbesondere Gewürzen.

### HINTERGRUND DER ERFINDUNG

Aus dem Stand der Technik sind bereits Vorrichtungen zum Dosieren und/oder Mischen von Gewürzen bekannt. Eine Vorrichtung zum Dosieren und/oder Mischen von schüttfähigen Lebensmitteln ist bekannt aus US4691821.

Aus der Offenlegungsschrift DE 24 13 900 ist beispielsweise ein Mehrkammer-Gewürzstreuer bekannt, der mindestens zwei um die Längsachse angeordnete Streukammern aufweist. Der Behälter ist mit einem Streudeckel verschlossen, dessen Bohrungen genau über den Kammern stehen, wobei mit einem weiteren Deckel, der mit dem Streudeckel drehbar verbunden ist, durch eine Aussparung die Streukammer angewählt werden kann.

Zwar ermöglicht eine solche Anordnung, dass mehrere Gewürze in einem Behältnis untergebracht werden können, allerdings ist eine gezielte Dosierung der einzelnen Gewürze nicht oder nur äußerst schwer zu realisieren.

Aus dem Stand der Technik sind ebenfalls Gewürzmühlen bekannt, die mehrere Gewürze aufnehmen können. Diese weisen voneinander getrennte Vorratsbehälter für unterschiedliche, ungemahlene Gewürzsorten auf, die mit einer Mahleinheit verbunden sind. In diesem werden die Gewürze zusammengeführt und gemahlen.

In solchen Vorrichtungen können die Anteile der einzelnen Gewürze der erhaltenen Mischung jedoch gar nicht oder nur grob bestimmt werden. Diese sind daher nur eingeschränkt dazu geeignet, Gewürzmischungen mit unterschiedlichen und variierenden Anteilen der einzelnen Gewürze herzustellen.

Die US 4 691 821 A betrifft gemäß Anspruch 1 eine Vorrichtung zum Aufbewahren von Substanzen und zum Abgeben von Portionen dieser Substanzen mit bestimmtem Volumen, wobei die Vorrichtung einen Behälter mit mindestens zwei Kammern sowie eine Dosierkammer umfasst, wobei die Dosierkammer an einem Ende des Behälters angeordnet ist und sich in entsprechender Position zur Atmosphäre hin öffnen lässt.

Die WO 2015 / 027 343 A1 betrifft gemäß Anspruch 1 einen Gewürzmischer, der eine Vielzahl von Vorratsbehältern umfasst, die jeweils mit unterschiedlichen Gewürzen befüllt werden können.

Die Vorratsbehälter sind auf einem stationären, karussellförmigen Träger angeordnet und weisen eine Dosiereinheit im unteren Abschnitt auf. Diese kann durch das motorgetriebene Ausgabemittel aus dem Vorratsbehälter gezogen werden, sodass die darin enthaltene Menge Gewürz aus dem Vorratsbehälter entfernt und über einen Trichter einem Mischbehältnis zugeführt werden kann.

Durch das motorgetriebene Dosiermittel weist dieser Gewürzmischer jedoch eine äußerst hohe Komplexität auf und kann darüber hinaus nicht manuell bedient werden.

### AUFGABE

Vor diesem Hintergrund bestand die Aufgabe der vorliegenden Erfindung daher darin, eine kompakte Vorrichtung zum Dosieren und/oder Mischen von schüttfähigen Lebensmitteln, insbesondere Gewürzen bereitzustellen, mit der die Herstellung einer Mischung mit unterschiedlichen Anteilen der einzelnen Lebensmitteln möglichst einfach, jedoch gleichsam genau gestaltet werden kann und die insbesondere auch manuell betrieben werden kann.

### BESCHREIBUNG DER ERFINDUNG

Diese Aufgabe wird gelöst durch eine erfindungsgemäße Vorrichtung gemäß Anspruch 1.

Die erfindungsgemäße Vorrichtung umfasst eine Vorratseinheit, die zwei oder mehr Vorratsbehälter zur Aufnahme von schüttfähigen Lebensmitteln aufweist. Die Vorrichtung weist weiterhin eine Dosiereinheit auf, die einen oder mehrere Dosierbehälter umfasst oder aus diesem oder diesen besteht. Einheiten können beispielsweise Kunststoffelemente sein, in welchen sich die Behälter befinden. Sowohl die Einheiten als auch die Behälter weisen jeweils mindestens eine Öffnung auf.

Vorrats- und Dosiereinheit werden durch eine erste Verbindungseinrichtung miteinander verbunden, die wahlweise einen offenen und verschlossenen Zustand aufweist. Im offenen Zustand sind Dosiereinheit und Vorratseinheit derart miteinander verbunden, dass schüttfähige Lebensmittel, vorzugsweise durch Schwerkraft, von der Vorratseinheit in die Dosiereinheit gelangen können. Im geschlossenen Zustand ist dies nicht möglich. Die Vorrichtung ist vorzugsweise derart ausgestaltet, dass die Dosiereinheit im Gebrauchszustand, insbesondere wenn die Vorrichtung befüllt wird und/oder schüttfähiges Lebensmittel aus der Vorrichtung hinausgelangen soll, in Gravitationsrichtung unterhalb der Vorratseinheit angeordnet. Die Angabe "in Gravitationsrichtung" bezieht sich auch in der Folge stets auf diesen Zustand.

"Verbindungseinrichtung" bedeutet im erfindungsgemäßen Zusammenhang nicht zwangsläufig, dass es sich hierbei um ein separates Bauteil handelt. Eine offene bzw. geschlossene Verbindung von Vorrats- und Dosiereinheit kann beispielsweise auch durch das Zusammenwirken verschiedener Elemente, wie beispielsweise relativ zueinander bewegbarer Öffnungen in den Vorrats- und Dosiereinheiten erzielt werden. Die Vorrats- und Dosiereinheiten sind vorzugsweise form-, reib- oder stoffschlüssig miteinander verbunden, insbesondere wenn die Verbindungseinrichtung kein separates Bauteil ist. Bevorzugt ist die Verbindung form- und reibschlüssig. Falls es sich bei der Verbindungseinrichtung um ein separates Bauteil handelt, sind Vorrats- und Dosierbereich vorzugsweise jeweils form-, reib- oder stoffschlüssig mit der Verbindungseinrichtung verbunden. In einer anderen bevorzugten Ausführungsform sind Vorrats- und Dosierbereich lösbar miteinander verbunden, insbesondere wenn die Verbindungseinrichtung kein separates Bauteil ist. Lösbar bedeutet, dass eine routinemäßige und zerstörungsfreie wiederholte Trennung und Verbindung der Einheiten möglich ist. Die Verbindung der Einheiten ist vorzugsweise form- und reibschlüssig. Dies ermöglicht beispielsweise den Austausch des Vorratsbehälter und somit eine vereinfachte und schnelle Handhabung eines Wechsels der schüttfähigen Lebensmittel. Falls es sich bei der Verbindungseinrichtung um ein separates Bauteil handelt, sind Vorrats- und Dosierbereich vorzugsweise jeweils lösbar miteinander verbunden.

Die Vorrichtung ist derart ausgestaltet, dass wenn mindestens zwei Vorratsbehälter mit jeweils einem schüttfähigem Lebensmittel oder unterschiedlichen schüttfähigen Lebensmitteln befüllt sind, das oder die schüttfähigen Lebensmittel aus mindestens zwei unterschiedlichen Vorratsbehältern in einen Dosierbehälter gelangen können, d.h. mindestens einer der Dosierbehälter ist mit einem schüttfähigen Lebensmittel oder mehreren schüttfähigen Lebensmittel aus mehreren, d.h. mindestens zwei unterschiedlichen Vorratsbehältern befüllbar. Der Ausdruck "in einen der einen oder mehreren Dosierbehälter gelangen kann" ist nicht dahingehend beschränkend auszulegen, dass schüttfähiges Lebensmittel aus den mindestens zwei unterschiedlichen Vorratsbehältern nicht in mehrere Dosierbehälter gelangen kann. Beispielsweise kann schüttfähiges Lebensmittel aus zwei unterschiedlichen Vorratsbehältern auch in jeweils zwei Dosierbehälter gelangen. Voraussetzung ist lediglich, dass zumindest einer dieser beiden Dosierbehälter mit Hilfe zweier unterschiedlicher Vorratsbehälter befüllbar ist.

Das Befüllen kann z.B. dadurch erfolgen, dass Vorrats- und Dosiereinheiten sowie die darin angeordneten Behälter jeweils mindestens eine Öffnung aufweisen und eine relative Bewegung der Öffnungen der Vorratseinheit gegenüber der Dosiereinheit und/oder der Vorratsbehälter gegenüber den Dosierbehältern ermöglicht wird, sodass das innerhalb der Vorratsbehälter befindliche, schüttfähige Lebensmittel in den oder die Dosierbehälter gelangen kann. Auf diese Weise sind Vorratsbehälter und Dosierbehälter also in wechselnden Kombinationen einander zuordenbar. Eine typische Ausgestaltung der Verbindungseinrichtung ermöglicht dies durch Verdrehung von Vorrats- und Dosiereinheit gegeneinander, insbesondere um eine gemeinsame Zentralachse. Die Zentralachse verläuft bevorzugt in Gravitationsrichtung. Andere Ausgestaltungen, beispielsweise über verschiebbare Verschlusselemente, quetschbare Schläuche oder betätigbare konische Verschlüsse werden beispielhaft in den Figuren gezeigt.

Die Vorratsbehälter, die Dosierbehälter und auch die nachfolgend beschriebenen Mischbehälter sind bevorzugt jeweils um eine Zentralachse entlang einer Kreisbahn hintereinander angeordnet. Auf diese Weise kann durch eine relative Drehung der Einheiten um die Zentralachse jeder Dosierbehälter jedem Vorratsbehälter zugeordnet werden.

Durch die Bewegung der Vorratseinheit relativ zur Dosiereinheit auch gleichzeitig eine wahlweise offene oder verschlossene Verbindung zwischen den Einheiten ermöglicht, d.h. durch die relative Bewegung kann gesteuert werden, ob ein oder mehrere in der Vorratseinheit befindliche, schüttfähige Lebenmittel in die Dosiereinheit gelangen können.

Dadurch, dass mindestens ein Dosierbehälter mit schüttfähigen Lebensmitteln aus verschiedenen Vorratsbehältern befüllbar ist, wird eine platzsparende und effiziente Vorrichtung zum Dosieren und/oder Mischen von schüttfähigen Lebensmitteln erhalten.

In einer bevorzugten Ausführungsform der Erfindung ist die Vorrichtung derart ausgestaltet, dass von genau zwei Vorratsbehältern ein dort befindliches, schüttfähiges Lebensmittel in einen Dosierbehälter gelangen kann.

In einer bevorzugten Ausführungsform der Erfindung ist die Vorrichtung derart ausgestaltet, dass von allen Vorratsbehältern ein dort befindliches, schüttfähiges Lebensmittel in einen Dosierbehälter gelangen kann.

In einer bevorzugten Ausführungsform der Erfindung ist die ist Vorrichtung derart ausgestaltet, dass von allen Vorratsbehältern ein dort befindliches, schüttfähiges Lebensmittel in alle Dosierbehälter gelangen kann.

In einer bevorzugten Ausführungsform ist die erste Verbindungseinrichtung derart ausgestaltet, dass Vorrats- und Dosiereinheit voneinander getrennt werden können, d.h. eine lösbare Verbindung vorliegt. Hierdurch kann nicht nur die Befüllung der Vorratseinheit, sondern auch die Reinigung der Vorrats- und/oder Dosiereinheit einfacher gestaltet werden. In einer bevorzugten Ausführungsform sind die Vorratsbehälter der Vorratseinheit derart miteinander verbunden, dass diese zusammen aus der Vorratseinheit entnommen werden können, d.h. ein Satz von Vorratsbehältern auf einfache Weise getauscht werden kann. Dies kann vorteilhaft sein, um einen schnellen Austausch der schüttfähigen Lebensmittel zu ermöglichen.

In bestimmten Ausführungen der Erfindung sind Vorrats- und Dosiereinheit hingegen nicht lösbar ausgestaltet, d.h. dass die routinemäßige und zerstörungsfreie Trennung von Vorrats- und Dosiereinheit nicht vorgesehen ist. Dies ist z.B. der Fall, wenn Vorrats- und Dosiereinheit miteinander verschweißt oder auf andere Weise dauerhaft und fest miteinander verbunden, insbesondere miteinander verschraubt oder vernutet sind. Auch in diesem Fall ermöglicht die Verbindungseinrichtung eine wahlweise offene oder verschlossene Verbindung von Vorrats- und Dosiereinheit, sodass von mindestens zwei der zwei oder mehr Vorratsbehälter schüttfähige Lebensmittel in einen der einen oder mehreren Dosierbehälter gelangen kann, um diesen oder diese zu befüllen. Dies kann beispielsweise dadurch erfolgen, dass Vorrats- und Dosiereinheit beispielsweise durch Nieten fest miteinander verbunden sind und daher nicht als Ganzes gegeneinander bewegt werden können, jedoch die innerhalb der Vorratseinheit angeordneten zwei oder mehr Vorratsbehälter relativ gegenüber dem Dosierbehälter bewegt können. Eine solche Anordnung weist in der Regel eine höhere Stabilität auf. Andere Ausgestaltungen der Verbindungseinrichtung, beispielsweise über verschiebbare Verschlusselemente, quetschbare Schläuche oder betätigbare konische Verschlüsse werden beispielhaft in den Figuren gezeigt.

In einer bevorzugten Ausführungsform der Erfindung umfasst die erste Verbindungseinrichtung ein Trennelement, wie z.B. eine Scheibe zum Trennen von Vorrats- und Dosiereinheit, die vorzugsweise eine zwischen Vorrats- und Dosiereinheit angeordnete Öffnung aufweist, welche durch ein bewegbares Verschlusselement geöffnet und verschlossen werden kann. Alternativ kann die Scheibe zwischen mindestens zwei Anordnungen bewegbar sein. In der einen Anordnung überlappen die Öffnungen dieser Fläche mit in den Vorrats- und Dosiereinheiten befindliche Öffnungen zumindest teilweise, sodass ein schüttfähiges Lebensmittel aus der Vorrats- in die Dosiereinheit gelangen kann.

Besonders bevorzugt umfasst die erste Verbindungseinrichtung einen quetschbaren Schlauch, der Vorratseinheit und Dosiereinheit miteinander verbindet und durch ein bewegbares Verschlusselement geöffnet und/oder verschlossen werden kann. Die Öffnung wird in diesem Fall von dem inneren Querschnitt des Schlauchs gebildet.

Weiterhin weist die Vorrichtung eine Mischeinheit umfassend oder bestehend aus mindestens einem Mischbehälter sowie eine zweite Verbindungseinrichtung auf. Die zweite Verbindungseinrichtung ermöglicht eine wahlweise offene oder geschlossene Verbindung von Dosier- und Mischeinheit, sodass das schüttfähige Lebensmittel, vorzugsweise durch Schwerkraft, von dem einen oder den mehreren Dosierbehältern in die Mischeinheit gelangen kann. Die Mischeinheit ist daher bevorzugt in Gravitationsrichtung unterhalb der Dosiereinheit angeordnet.

Durch die Verwendung einer separaten Mischeinheit kann die Dosiereinheit ausschließlich für die Dosierung eines einzelnen Lebensmittels wie einem Gewürz genutzt werden, was von Vorteil sein kann, da dann die Dosierung einer bestimmten Menge eines Gewürzes über die vollständige Füllung eines Dosierbehälters erfolgen kann.

Vorzugsweise kann zumindest ein Teil, vorzugsweise die gesamte Dosiereinheit relativ zur Vorratseinheit bewegt werden. Besonders bevorzugt sind Vorratseinheit und/oder Dosiereinheit drehbar gelagert und lassen sich hierdurch relativ zueinander bewegen.

Weiterhin kann zumindest ein Teil, vorzugsweise die gesamte Mischeinheit relativ zur Dosiereinheit bewegt werden. Die Vorrichtung ist derart ausgebildet, dass durch die Bewegung der Mischeinheit relativ zur Dosiereinheit, oder umgekehrt, die wahlweise offene oder verschlossene Verbindung von Dosier- und Mischeinheit ermöglicht wird.

Besonders bevorzugt sind Vorratseinheit und/oder Dosiereinheit und/oder Mischeinheit drehbar gelagert, besonders bevorzugt um eine Zentralachse herum, und lassen sich hierdurch relativ zueinander bewegen, besonders bevorzugt wird hierdurch eine wahlweise offene oder geschlossene Verbindung der jeweiligen Einheiten erzeugt.

Durch die oben beschriebenen Anordnungen wird eine besonders platzsparende und flexible Ausführung der Vorrichtung erreicht.

In einer bevorzugten Ausführungsform der Erfindung weist die Vorrichtung zwei oder mehr Dosierbehälter, vorzugsweise drei oder mehr, besonders bevorzugt fünf oder mehr Dosierbehälter auf. Hierdurch können komplexe Gemische von schüttfähigen Lebensmittel wie Gewürzen hergestellt werden. Ein Beispiel hierfür sind Currys.

In einer bevorzugten Ausführungsform der Erfindung weist mindestens einer der Vorrats-, Dosier- oder Mischbehälter eine ablesbare Skala auf. In einer bevorzugten Ausführungsform der Erfindung weist mindestens einer der Vorrats-, Dosier- oder Mischeinheiten eine ablesbare Skala auf.

In einer bevorzugten Ausführungsform umfasst die Vorrichtung zwei oder mehr Dosierbehälter, wobei die Dosierbehälter im Wesentlichen gleiche (Δ Volumen in Relation zu größtem Volumen eines Dosierbehälters ≤ 10 %) oder unterschiedliche mit schüttfähigen Lebensmitteln befüllbare Volumina aufweisen. Vorzugsweise handelt es sich bei dem befüllbaren Volumen um ein vordefiniertes Volumen, besonders bevorzugt entspricht das jeweilige befüllbare Volumen einem typischerweise zur Würzung eingesetzten Küchenmaßeinheit für ein Volumen, das vorzugsweise ausgewählt ist aus der Gruppe bestehend aus einem Esslöffel (Volumenbereich: 10-15 cm³), einem Teelöffel (Volumenbereich: 4-6 cm³), einem Barlöffel (Volumenbereich: 2-3 cm³)einer Messerspitze (Volumenbereich: 0,5-1 cm³), einer Prise (0,25-0,375 cm³) und Kombinationen der vorgenannten. Besonders bevorzugt sind die befüllbaren Volumina aller Dosierbehälter der Vorrichtung ausgewählt aus der Gruppe bestehend aus einem Esslöffel (Volumenbereich: 10-15 cm³), einem Teelöffel (Volumenbereich: 4-6 cm³), einem Barlöffel (Volumenbereich: 2-3 cm³), einer Messerspitze, einer Prise (0,25-0,375 cm³) und Kombinationen der vorgenannten (Volumenbereich: 0,5-1 cm³).

Besonders bevorzugt weisen zwei oder mehr der Dosierbehälter das gleiche befüllbare Volumen auf. In einer bevorzugten Ausführungsform ist das befüllbare Volumen ≤ 15 cm³, bevorzugter ≤ 12 cm³, stärker bevorzugt, ≤ 6 cm³, noch stärker bevorzugt ≤ 5 ml und am stärksten bevorzugt ≤ 1 cm³.

Weiterhin ist die zweite Verbindungseinrichtung derart ausgestaltet, dass diese eine relative Bewegung der Dosiereinheit gegenüber der Mischeinheit erlaubt. Dies kann beispielsweise dadurch erreicht werden, dass die zweite Verbindungseinrichtung eine Verdrehung von Misch- und Dosiereinheit gegeneinander ermöglicht, insbesondere um die Zentralachse. Alle für die erste Verbindungseinrichtung beschriebenen Ausgestaltungen können unproblematisch auch für die zweite Verbindungseinrichtung eingesetzt werden.

In einer bevorzugten Ausführungsform ist die zweite Verbindungseinrichtung lösbar ausgestaltet, d.h. Dosier- und Mischeinheit können voneinander getrennt werden.

In bestimmten Ausführungen der Erfindung sind Dosier- und Mischeinheit hingegen nicht lösbar ausgestaltet, d.h. dass die routinemäßige und zerstörungsfreie Trennung von Dosier- und Mischeinheit nicht vorgesehen ist.

Durch die Bewegung der Mischeinheit relativ zur Dosiereinheit wird eine wahlweise offene oder verschlossene Verbindung ermöglicht, d.h. durch die relative Bewegung kann gesteuert werden, ob ein oder mehrere in der Dosiereinheit angeordnete schüttfähige Lebensmittel in die Mischeinheit gelangen können.

Dies kann beispielsweise dadurch erfolgen, dass die Verbindungseinrichtung eine zwischen Dosier- und Mischeinheit angeordnete Scheibe umfasst, die Öffnungen aufweist und zwischen mindestens zwei Anordnungen bewegbar ist. In der einen Anordnung überlappen die Öffnungen dieser Fläche mit den in der Misch- und Dosiereinheit befindlichen Öffnungen zumindest teilweise, sodass schüttfähiges Lebensmittel wie Gewürz aus der Dosier- in die Mischeinheit gelangen kann. In der zweiten Anordnung ist die Fläche derart angeordnet, dass sie die zwischen Misch- und Dosiereinheit befindlichen Öffnungen verschließt.

In einer bevorzugten Ausführungsform der Erfindung weist die Vorrichtung eine Zentralachse auf, um die die Vorrats- und/oder Dosier- und/oder Mischeinheit drehbar sind und wodurch die vorgenannten Elemente relativ zueinander bewegt werden können. In einer bevorzugten Ausführungsform der Erfindung weist die Vorrichtung eine Zentralachse auf, um die ein Teil oder alle der Vorrats- und/oder Dosier- und/oder Mischbehälter drehbar sind und wodurch die vorgenannten Elemente relativ zueinander bewegt werden können. Besonders bevorzugt weist die erfindungsgemäße Vorrichtung eine im Wesentlichen zylindrische Form auf.

Bei der erfindungsgemäßen Vorrichtung handelt es sich vorzugsweise um ein Handgerät, d.h. ein Gerät, welches Abmessungen aufweist, welche eine Handhabung der Vorrichtung in einer Hand haltbar gestatten. Insbesondere weist die Vorrichtung in einer bevorzugten Ausführungsform der Erfindung eine maximale Erstreckung auf, welche durch den maximalen Abstand zweier Punkte der Vorrichtung definiert ist, die ≤ 20 cm, bevorzugt ≤ 15 cm, und am bevorzugtestens ≤ 12 cm ist.

In einer bevorzugten Ausführungsform der Erfindung eignet sich die erfindungsgemäße Vorrichtung zum Dosieren und/oder Mischen von festen oder flüssigen schüttfähigen Lebensmitteln, insbesondere in Pulver- oder Körnerform, wie z.B. Müslibestandteilen oder Gewürzen.

Die Erfindung betrifft auch die Verwendung der erfindungsgemäßen Vorrichtung zum Dosieren und/oder Mischen von schüttfähigen Stoffen.

Die Erfindung betrifft auch eine Vorrichtung wie in den Ansprüchen 1-8 definiert mit innerhalb der Vorrichtung angeordneten schüttfähigen Lebensmitteln.

### BEISPIELE

Die Erfindung wird nun anhand einer expliziten Ausführungsform und dazugehöriger Figur näher erläutert. Dabei zeigt:
- **Fig. 1**: eine Seitenansicht einer ersten erfindungsgemäßen Vorrichtung zum Dosieren und Mischen von schüttfähigen Lebensmitteln.
- **Fig. 2**: eine Seitenansicht einer ersten erfindungsgemäßen Vorrichtung zum Dosieren und Mischen von schüttfähigen Lebensmitteln in einer Schnittdarstellung.
- **Fig. 3**: eine Seitenansicht einer zweiten erfindungsgemäßen Vorrichtung zum Dosieren und Mischen von schüttfähigen Lebensmitteln in einer Schnittdarstellung.
- **Fig. 4**: eine Draufsicht einer zweiten erfindungsgemäßen Vorrichtung zum Dosieren und Mischen von schüttfähigen Lebensmitteln in einer Schnittdarstellung.
- **Fig. 5**: eine Seitenansicht einer dritten erfindungsgemäßen Vorrichtung zum Dosieren und Mischen von schüttfähigen Lebensmitteln.
- **Fig. 6**: eine Seitenansicht einer dritten erfindungsgemäßen Vorrichtung zum Dosieren und Mischen von schüttfähigen Lebensmitteln in einer Schnittdarstellung.

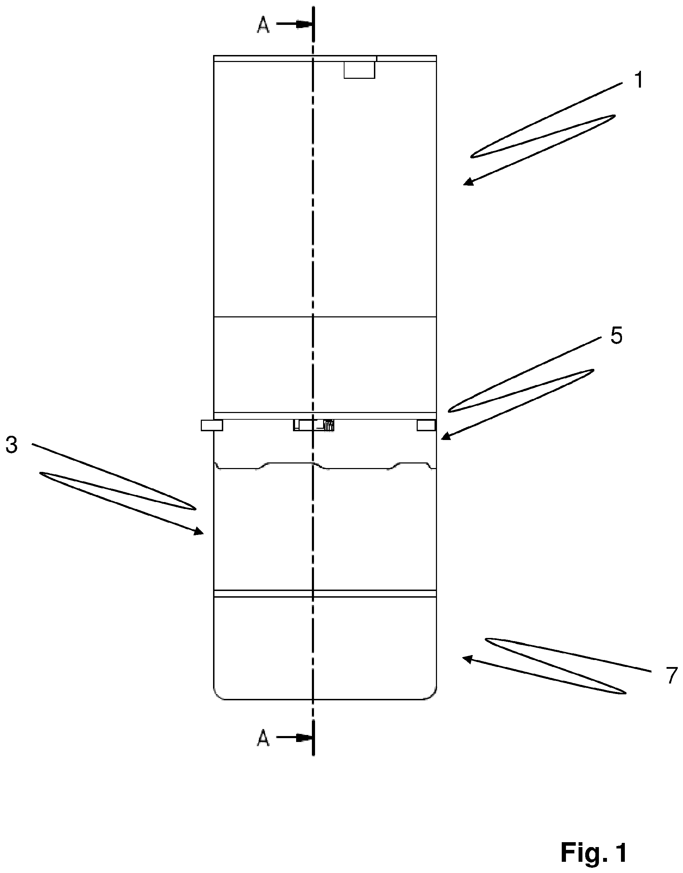

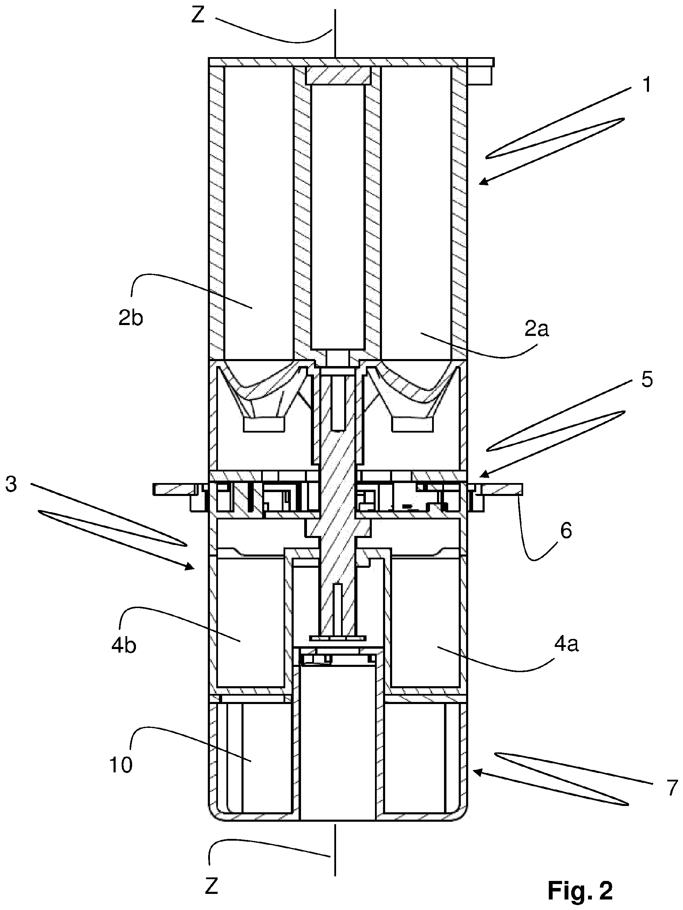

Die in den **Fig. 1** und **2** gezeigte erste Ausführungsform der erfindungsgemäßen Vorrichtung umfasst eine Vorratseinheit **1,** die zwei Vorratsbehälter **2a, 2b** zur Aufnahme von schüttfähigen Lebensmitteln umfasst. Die Vorrichtung umfasst ferner eine Dosiereinheit 3 sowie eine erste Verbindungseinrichtung **5.** Die Dosiereinheit **3** ist in Gravitationsrichtung unterhalb der Vorratseinheit **1** angeordnet. Die Vorratseinheit weist in Gravitationsrichtung nach unten hin eine Öffnung auf, die Dosiereinheit nach oben hin. Über die erste Verbindungseinrichtung **5** ist die Vorratseinheit **1** mit der Dosiereinheit **3** mit den Dosierbehältern **4a** und **4b** verbunden. Die erste Verbindungseinrichtung weist Verschlusselemente **6** auf, mit welchen die Verbindung zwischen Vorratseinheit und Dosiereinheit wahlweise geöffnet oder geschlossen werden kann. In der ersten Ausführungsform erfolgt dies durch Ein- oder Ausschieben des Verschlusselementes hin zur oder von der Richtung der Zentralachse **Z** weg. Hierdurch können schüttfähige Lebensmittel steuerbar von der Vorratseinheit in die Dosiereinheit gelangen. Die Vorrichtung weist weiterhin eine Mischeinheit **7** auf, die über eine zweite Verbindungseinrichtung mit der Dosiereinheit verbunden ist, hier in Form relativ zueinander bewegbarer Öffnungen in den Dosier- und Mischeinheiten. Es sind jedoch wie in den nachfolgend beschriebenen Ausführungen auch alle anderen vorgenannten Verbindungseinrichtungen einsetzbar. Die Vorratseinheit **1** und die Dosiereinheit **3** sind um eine Zentralachse relativ zueinander drehbar. Hierdurch kann schüttfähiges Lebensmittel von mindestens zwei der zwei oder mehr Vorratsbehälter in einen der einen oder mehreren Dosierbehälter (4a, 4b) gelangen. Auch die nachfolgend beschriebenen Ausführungen weisen eine derartige Verdrehbarkeit auf.

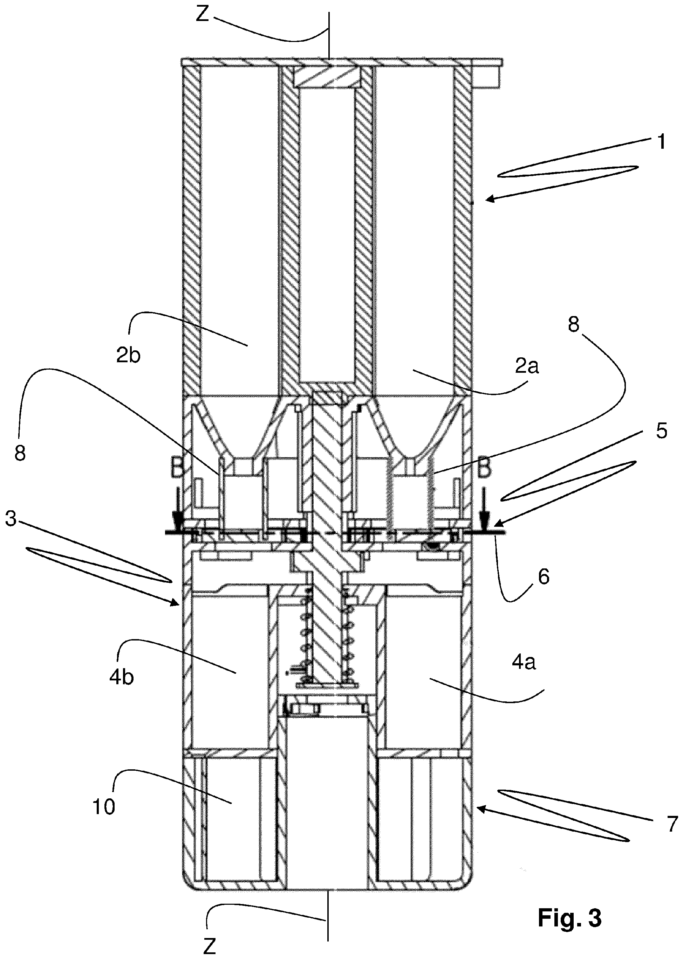

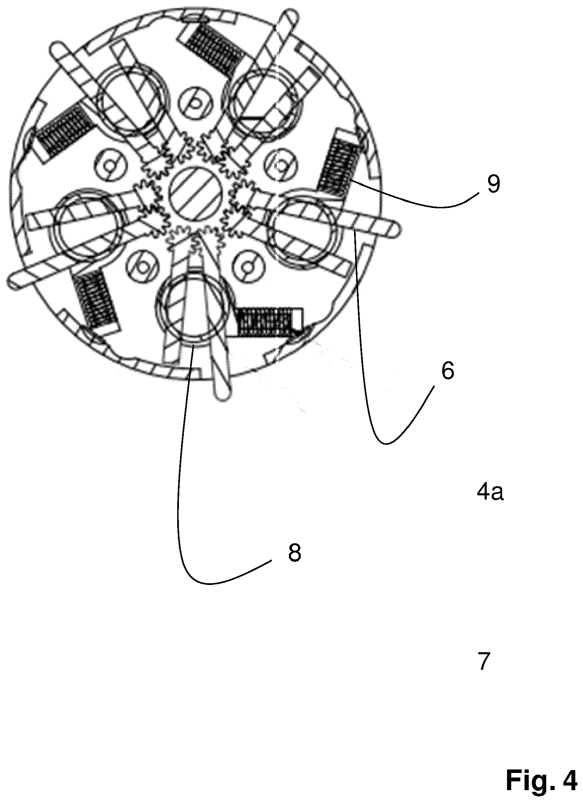

Die in den **Fig. 3** und **4** gezeigte zweite Ausführungsform stimmt mit der ersten mit Ausnahme der Verbindungseinrichtung **5** in ihrem Aufbau grundsätzlich überein. Allerdings ist dort die erste Verbindungseinrichtung dergestalt, dass mehrere quetschbare Schläuche **8** mittels der Verschlusselemente **6** zu öffnen oder zu schließen sind, sodass schüttfähige Lebensmittel von der Vorratseinheit steuerbar in die Dosiereinheit gelangen können. Die einzelnen Verschlusselemente sind daher in Form einer "Zange" ausgebildet, die einen Schlauch umschließt und die von einer Feder **9** in der Weise vorgespannt werden, dass die Zange den Schlauch verschließt. Durch Betätigung des Verschlusselementes gegen die Feder **9** wird die Zange geweitet, der Schlauch geöffnet und dadurch kann das schüttfähige Lebensmittel in die Dosiereinheit gelangen. In der Darstellung der Figur 3 sind die Schläuche, die an den konischen Enden zweier Vorratsbehälter befestigt sind, zur besseren Hervorhebung unterschiedlich graphisch dargestellt.

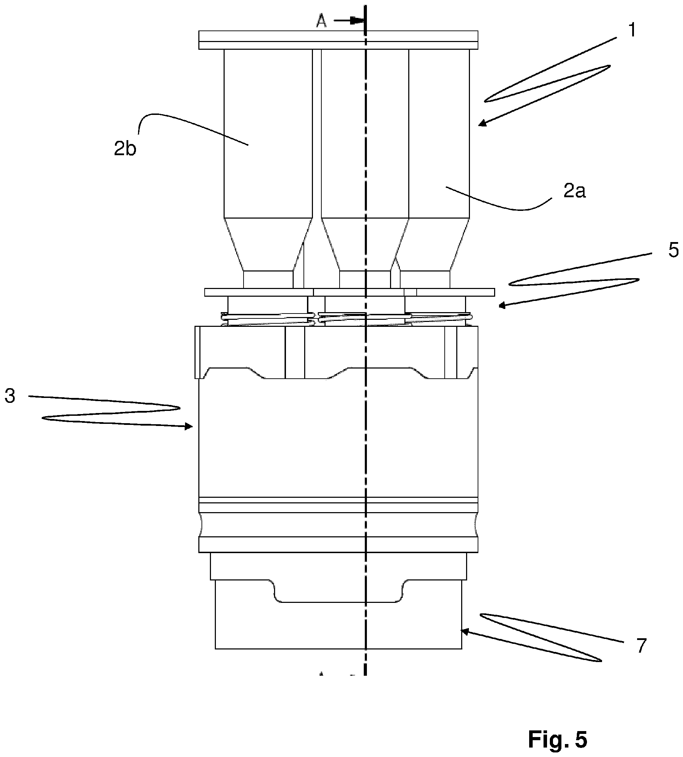

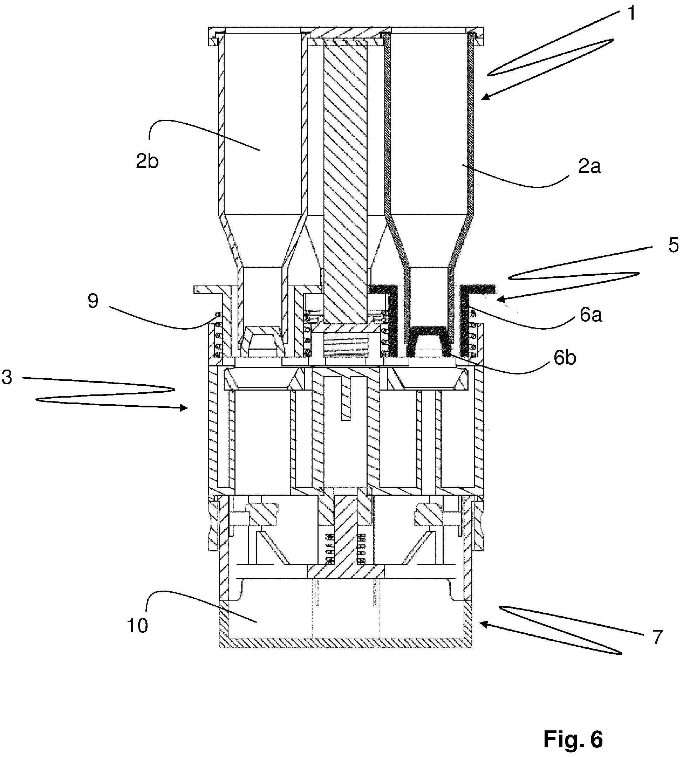

Die in **Fig. 5** und **6** gezeigte, dritte Ausführungsform der erfindungsgemäßen Vorrichtung umfasst eine Vorratseinheit **1,** die zwei Vorratsbehälter **2a, 2b** zur Aufnahme von schüttfähigen Lebensmitteln umfasst. Die Vorrichtung umfasst ferner eine Dosiereinheit 3 sowie eine erste Verbindungseinrichtung **5.** Die Dosiereinheit **3** ist in Gravitationsrichtung unterhalb der Vorratseinheit **1** angeordnet. Die Vorratseinheit weist in Gravitationsrichtung nach unten hin eine Öffnung auf, die Dosiereinheit nach oben hin. Über die erste Verbindungseinrichtung **5** ist die Vorratseinheit **1** mit der Dosiereinheit **3** mit den Dosierbehältern **4a** und **4b** verbunden, wobei die erste Verbindungseinrichtung Öffnungen aufweist, sodass schüttfähige Lebensmittel von der Vorratseinheit in die Dosiereinheit gelangen können. In dieser Ausführung umfasst die Verbindungseinrichtung **5** ein Verschlusselement **6a/b,** welches einen konischen Abschnitt **6a** aufweist, der in den sich verjüngenden Abschnitt des Gewürzbehälters eingreift und diesen aufgrund der Vorspannung durch die Feder **9** grundsätzlich verschließt. Durch Betätigen des Abschnitts **6a,** welcher mit **6b** verbunden ist (nicht dargestellt) wird der konische Abschnitt **6a** in Gravitationsrichtung nach unten verschoben und dadurch ermöglicht, dass schüttfähiges Lebensmittel vom Vorratsbehälter in die Dosiereinheit gelangt.

### BEZUGSZEICHEN

- **1**: Vorratseinheit
- **2a, 2b**: Vorratsbehälter
- **3**: Dosiereinheit
- **4a, 4b**: Dosierbehälter
- **5**: erste Verbindungseinrichtung
- **6, 6a/b**: Verschlusselemente
- **7**: Mischeinheit
- **8**: quetschbare Schläuche
- **9**: Feder
- **10**: Mischbehälter

## Patentansprüche

1. **Vorrichtung** zum Dosieren und/oder Mischen von schüttfähigen Lebensmitteln, insbesondere Gewürzen, umfassend nachfolgende Elemente:
a) eine Vorratseinheit (1) umfassend zwei oder mehr Vorratsbehälter (2a, 2b) zur Aufnahme von schüttfähigen Lebensmitteln,
b) eine Dosiereinheit (3), umfassend ein oder mehrere Dosierbehälter (4a, 4b) zur Aufnahme von schüttfähigen Lebensmitteln,
c) eine erste Verbindungseinrichtung (5), die eine wahlweise offene oder verschlossene Verbindung von Vorrats- und Dosiereinheit ermöglicht,
d) eine Mischeinheit (7) umfassend mindestens einen Mischbehälter (10),
e) eine zweite Verbindungseinrichtung, die eine wahlweise offene oder verschlossene Verbindung von Dosier- (3) und Mischeinheit (7) ermöglicht, sodass ein schüttfähiges Lebensmittel von dem einen oder den mehreren Dosierbehältern (4a, 4b) in mindestens einen Mischbehälter (10) der Mischeinheit (7) gelangen kann, wobei die zweite Verbindungseinrichtung derart ausgebildet ist, dass die Mischeinheit (7) relativ zur Dosiereinheit (3) bewegt werden kann, oder umgekehrt,
wobei die Vorrichtung derart ausgebildet ist, dass von mindestens zwei der zwei oder mehr Vorratsbehälter (2a, 2b) schüttfähiges Lebensmittel in einen der einen oder mehreren Dosierbehälter (4a, 4b) gelangen kann, um diesen zumindest teilweise zu befüllen,
**dadurch gekennzeichnet, dass**
die Vorrichtung und die zweite Verbindungseinrichtung derart ausgebildet sind, dass durch die Bewegung der Mischeinheit (7) relativ zur Dosiereinheit (3) die wahlweise offene oder verschlossene Verbindung von Dosier- und Mischeinheit ermöglicht wird.

2. **Vorrichtung** nach Anspruch 1, wobei die erste Verbindungseinrichtung (5) eine zwischen Vorrats- und Dosiereinheit angeordnete Öffnung umfasst, die durch ein bewegbares Verschlusselement (6) geöffnet und verschlossen werden kann.

3. **Vorrichtung** nach einem der vorausgehenden Ansprüche, wobei die Dosiereinheit (3) relativ zur Vorratseinheit (1) bewegt werden kann, oder umgekehrt, wobei vorzugsweise die Vorrichtung derart ausgebildet ist, dass durch die Bewegung der Dosiereinheit (3) relativ zur Vorratseinheit (1), oder umgekehrt, die wahlweise offene oder verschlossene Verbindung von Dosier- und Vorratseinheit ermöglicht wird.

4. **Vorrichtung** nach einem der vorausgehenden Ansprüche, wobei die Vorrichtung mehrere Dosierbehälter (4a, 4b) aufweist.

5. **Vorrichtung** nach einem der vorausgehenden Ansprüche, wobei die Dosierbehälter (4a, 4b) unterschiedliche befüllbare Volumina aufweisen.

6. **Vorrichtung** nach einem der vorausgehenden Ansprüche, wobei die Vorrichtung eine Zentralachse aufweist, um die die Vorrats- und/oder Dosier- und/oder Mischeinheit drehbar ist.

7. **Vorrichtung** nach einem der vorausgehenden Ansprüche, wobei es sich bei der Vorrichtung um ein Handgerät handelt.

8. **Verwendung** einer Vorrichtung wie in einem der vorausgehenden Ansprüche definiert zum Dosieren und/oder Mischen von flüssigen oder festen Stoffen.

## Claims

1. Device for dosing and/or mixing of pourable foodstuffs, in particular spices, comprising the following elements:
a) a storage unit (1) comprising two or more storage containers (2a, 2b) for receiving pourable foodstuffs,
b) a dosing unit (3), comprising one or more dosing containers (4a, 4b) for receiving pourable foodstuffs,
c) a first connecting device (5), which enables a selectively open or closed connection of the storage unit and the dosing unit,
d) a mixing unit (7) comprising at least one mixing container (10),
e) a second connecting device, which enables a selectively open or closed connection of the dosing (3) and mixing unit (7), so that a pourable foodstuff can pass from the one or more dosing containers (4a, 4b) into at least one mixing container (10) of the mixing unit (7),
wherein the second connecting device is configured such that the mixing unit (7) can be moved relative to the dosing unit (3), or vice versa,
wherein the device is configured such that pourable foodstuff from at least two of the two or more storage containers (2a, 2b) can pass into one of the one or more dosing containers (4a, 4b) in order to at least partially fill said dosing container,
**characterized in that**
the device and the second connecting device are configured such that the selectively open or closed connection of the dosing unit and the mixing unit is enabled by the movement of the mixing unit (7) relative to the dosing unit (3).

2. Device according to claim 1, wherein the first connecting device (5) comprises an opening arranged between the storage unit and the dosing unit, which opening can be opened and closed by a movable closure element (6).

3. Device according to any one of the preceding claims, wherein the dosing unit (3) can be moved relative to the storage unit (1), or vice versa, wherein preferably the device is configured such that the selectively open or closed connection of the dosing unit and the storage unit is enabled by the movement of the dosing unit (3) relative to the storage unit (1), or vice versa.

4. Device according to any one of the preceding claims, wherein the device comprises a plurality of dosing containers (4a, 4b).

5. Device according to any one of the preceding claims, wherein the dosing containers (4a, 4b) have different fillable volumes.

6. Device according to any one of the preceding claims, wherein the device has a central axis about which the storage unit and/or the dosing unit and/or the mixing unit is rotatable.

7. Device according to any one of the preceding claims, wherein the device is a handheld device.

8. Use of a device as defined in any one of the preceding claims for dosing and/or mixing of liquid or solid substances.

## Revendications

1. **Dispositif** de dosage et/ou de mélange de produits alimentaires versables, en particulier d'épices, comprenant les éléments suivants :
a) une unité de stockage (1) comprenant deux récipients de stockage (2a, 2b) ou plus destinés à recevoir des produits alimentaires versables,
b) une unité de dosage (3), comprenant un ou plusieurs récipients de dosage (4a, 4b) destinés à recevoir des produits alimentaires versables,
c) un premier dispositif de liaison (5), qui permet, de manière sélective, une liaison ouverte ou fermée de l'unité de stockage et de l'unité de dosage,
d) une unité de mélange (7) comprenant au moins un récipient de mélange (10),
e) un second dispositif de liaison qui permet, de manière sélective, une liaison ouverte ou fermée de l'unité de dosage (3) et de l'unité de mélange (7), de sorte qu'un produit alimentaire versable puisse passer d'un ou de plusieurs récipients de dosage (4a, 4b) dans au moins un récipient de mélange (10) de l'unité de mélange (7), ledit second dispositif de liaison étant conçu de sorte que l'unité de mélange (7) puisse être déplacée par rapport à l'unité de dosage (3), ou inversement,
le dispositif étant conçu de sorte que, à partir d'au moins les deux ou d'au moins deux des récipients de stockage (2a, 2b), un produit alimentaire versable puisse parvenir dans le ou plusieurs des récipients de dosage (4a, 4b) afin de les remplir au moins partiellement,
**caractérisé en ce que**
le dispositif et le second dispositif de liaison sont conçus de sorte que le déplacement de l'unité de mélange (7) par rapport à l'unité de dosage (3) permet, de manière sélective, la liaison ouverte ou fermée de l'unité de dosage et de l'unité de mélange.

2. **Dispositif** selon la revendication 1, dans lequel le premier dispositif de liaison (5) comprend une ouverture disposée entre l'unité de stockage et l'unité de dosage, ladite ouverture pouvant être ouverte et fermée au moyen d'un élément de fermeture mobile (6).

3. **Dispositif** selon l'une quelconque des revendications précédentes, dans lequel l'unité de dosage (3) peut être déplacée par rapport à l'unité de stockage (1), ou inversement, le dispositif étant de préférence conçu de sorte que le déplacement de l'unité de dosage (3) par rapport à l'unité de stockage (1), ou inversement, permette, de manière sélective, la liaison ouverte ou fermée de l'unité de dosage et de l'unité de stockage.

4. **Dispositif** selon l'une quelconque des revendications précédentes, dans lequel le dispositif comporte plusieurs récipients de dosage (4a, 4b).

5. **Dispositif** selon l'une quelconque des revendications précédentes, dans lequel les récipients de dosage (4a, 4b) présentent des volumes de remplissage différents.

6. **Dispositif** selon l'une quelconque des revendications précédentes, dans lequel le dispositif présente un axe central autour duquel l'unité de stockage et/ou de dosage et/ou de mélange peut tourner.

7. **Dispositif** selon l'une quelconque des revendications précédentes, dans lequel le dispositif est un appareil portatif.

8. **Utilisation** d'un dispositif tel que défini dans l'une quelconque des revendications précédentes pour le dosage et/ou le mélange de substances liquides ou solides.
